# FASCICULE DE BREVET EUROPEEN

(11) **EP 1 383 218 B1**
(45) Date de publication et mention de la délivrance du brevet: **24.08.2011**
(21) Numéro de dépôt: 03354050.1
(22) Date de dépôt: 02.06.2003
(51) Int. Cl.: H02H 3/14, H02H 5/10

(54) **Dispositif de surveillance de rupture de neutre et de terre, et appareil de coupure électrique comportant un tel dispositif**
Vorrichtung zur Überwachung einer Unterbrechung in Nulleiter und Schutzleiter, sowie ein die Vorrichtung enthaltendes Schaltgerät
Device for monitoring break of neutral and earth, and apparatus for switching off comprising such a device

(30) Priorité: 18.07.2002 FR 0209148
(43) Date de publication de la demande: 21.01.2004
(73) Titulaire: Schneider Electric Industries SAS, 92500 Rueil-Malmaison (FR)
(72) Inventeur: Tian, Simon, 38050 Grenoble Cedex 09 (FR)
(74) Mandataire: Tripodi, Paul

(56) Documents cités:
- FR-A- 2 697 385

## Description

### DOMAINE TECHNIQUE

L'invention concerne un dispositif de surveillance de conducteurs de neutre et de terre comportant :
- des moyens de traitement pour fournir un signal de détection de perte de neutre, et
- des premiers moyens de détection de tension destinés à être connectés entre un conducteur de neutre et un conducteur de terre pour fournir audits moyens de traitement un premier signal représentatif d'une tension entre neutre et terre.

L'invention concerne aussi un appareil de coupure électrique comportant des contacts électriques principaux reliés entre une entrée et une sortie, un relais de déclenchement de l'ouverture desdits contacts principaux, l'entrée comportant une borne de conducteur de neutre, une borne de conducteur de terre et au moins une borne de conducteur de phase.

### ETAT DE LA TECHNIQUE

Les dispositifs de surveillance connus comportant des circuits de détection de la perte de conducteur de neutre et parfois des circuits de détection de perte de conducteur de terre sont basés sur la mesure de tension entre une entrée recevant la tension de neutre et une entrée recevant la ligne de terre.

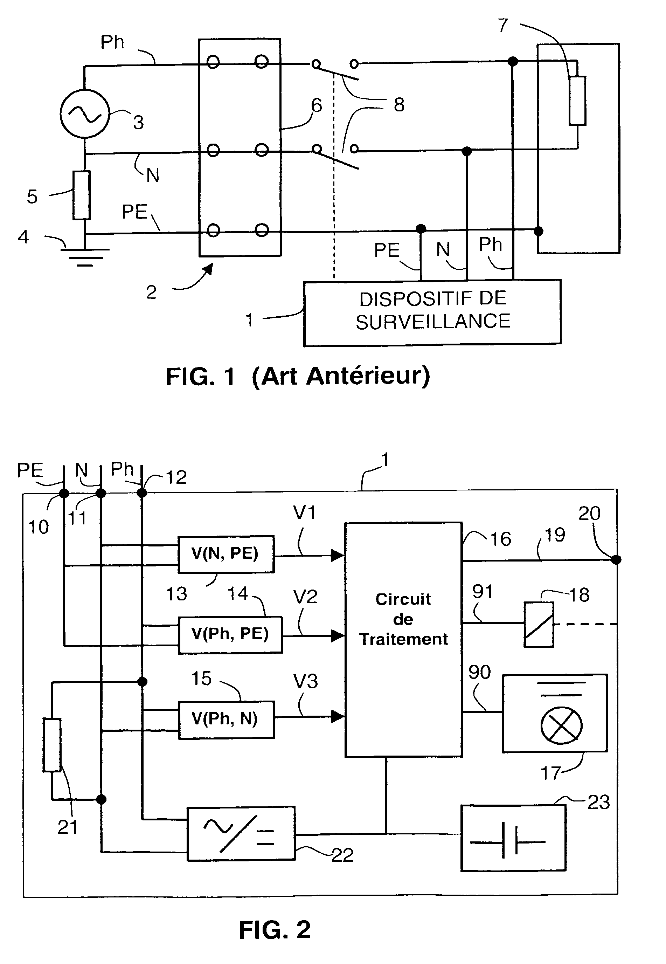

La figure 1 montre un dispositif de surveillance 1 connecté à un réseau électrique 2 à surveiller. Le réseau comporte une source de tension alternative 3 comportant un conducteur de neutre N, un conducteur de phase Ph et une ligne de terre PE connectée à une prise de terre 4. Selon le régime de neutre, le conducteur de neutre peut être connecté à la ligne de terre PE ou la prise de terre 4 directement ou à travers une impédance 5.

Les conducteurs de phase, de neutre et de terre passent souvent par diverses bornes et circuits de connexion 6 avant d'atteindre des charges électriques 7. Certaines charges peuvent nécessiter une connexion au conducteur de terre, notamment pour la mise à la masse de boîtiers métalliques et de filtres électriques.

Un dispositif de surveillance connecté aux conducteurs du réseau surveille la présence du conducteur de neutre afin de prévenir des risques de surtension et des risques de ne pas alimenter des circuits de protection nécessitant une source d'alimentation auxiliaire. Si une surtension due notamment à une déconnexion du conducteur de neutre est détectée, le dispositif peut commander l'ouverture d'un appareil de coupure 8 pour arrêter l'alimentation de la charge 7.

Un dispositif de l'état de la technique détectant la perte de neutre et la perte de terre est décrit dans le brevet US4931893. Ce circuit utilise la décharge d'un condensateur dans un conducteur de neutre ou de terre.

Les dispositifs de surveillance connus de l'état de la technique ne permettent pas une détection et une signalisation suffisamment sécurisées de la déconnexion d'un conducteur de neutre ou de terre.

### EXPOSE DE L'INVENTION

L'invention a pour but un dispositif de surveillance de conducteur de neutre permettant une détection sécurisée de la détection d'un conducteur de neutre ou de terre et un appareil de coupure électrique comportant un tel dispositif de surveillance.

Un dispositif de surveillance selon l'invention comporte
- des seconds moyens de détection de tension destinés à être connectés entre un conducteur de phase et le conducteur de terre pour fournir audits moyens de traitement un second signal représentatif d'une tension entre phase et terre, et
- des troisièmes moyens de détection de tension destinés à être connectés entre le conducteur de phase et le conducteur de neutre pour fournir audits moyens de traitement un troisième signal représentatif d'une tension entre phase et neutre, les moyens de traitement fournissant un signal de perte neutre et/ou un signal de perte de terre en fonction des valeurs dudit premier signal fourni par lesdits premiers moyens de détection, dudit second signal fourni par lesdits seconds moyens de détection, et dudit troisième signal fourni par lesdits troisièmes moyens de détection.

Dans un mode de réalisation préférentiel, les moyens de traitement fournissent un signal d'erreur de connexion de conducteurs de neutre, de phase, et/ou de terre en fonction des valeurs dudit premier signal fourni par lesdits premiers moyens de détection, dudit second signal fourni par lesdits seconds moyens de détection, et dudit troisième signal fourni par lesdits troisièmes moyens de détection.

Avantageusement, le dispositif de surveillance comporte des moyens de signalisation de défaut de perte de neutre et/ou de perte de terre connectés aux moyens de traitement.

De préférence, les moyens de traitement fournissent un signal de connexions normales lorsque :
- le premier signal représentatif d'une tension entre neutre et terre est inférieur à un premier seuil prédéterminé,
- le second signal représentatif d'une tension entre phase et terre est supérieur à un second seuil prédéterminé, et
- le troisième signal représentatif d'une tension entre phase et neutre est supérieur à un troisième seuil prédéterminé.

De préférence, les moyens de traitement fournissent un signal de perte de conducteur neutre lorsque :
- le second signal représentatif d'une tension entre phase et terre est supérieur à un second seuil prédéterminé, et
- le troisième signal représentatif d'une tension entre phase et neutre est inférieur à un troisième seuil prédéterminé.

De préférence, les moyens de traitement fournissent un signal de perte de conducteur de terre lorsque :
- le second signal représentatif d'une tension entre phase et terre est inférieur à un second seuil prédéterminé, et
- le troisième signal représentatif d'une tension entre phase et neutre est supérieur à un troisième seuil prédéterminé.

De préférence, les moyens de traitement fournissent un signal d'erreur de connexion lorsque :
- le premier signal représentatif d'une tension entre neutre et terre est supérieur à un premier seuil prédéterminé,
- le second signal représentatif d'une tension entre phase et terre est inférieur à un second seuil prédéterminé, et
- le troisième signal représentatif d'une tension entre phase et neutre est supérieur à un troisième seuil prédéterminé.

Avantageusement, les premiers, les seconds et les troisièmes moyens de détection comportent des moyens d'isolement électrique entre des signaux d'entrée et des signaux de sortie.

Avantageusement, les moyens de traitement comportent une alimentation électrique autonome fournissant de l'énergie électrique aux circuits desdits moyens de traitement en cas de défaut d'alimentation normale.

Un appareil de coupure électrique selon un mode de réalisation de l'invention comporte au moins un dispositif de surveillance tel que défini ci-dessus fournissant un signal d'ouverture au relais de déclenchement, les premiers moyens de détection de tension étant connectés entre la borne de conducteur de neutre et la borne de conducteur de terre, les seconds moyens de détection de tension étant connectés entre la borne de conducteur de phase et la borne de conducteur de terre, et les troisièmes moyens de détection de tension étant connectés entre la borne de conducteur de phase et la borne de conducteur de neutre.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- la figure 1 représente un schéma d'une installation avec un dispositif de surveillance de l'art antérieur connecté à un réseau électrique à surveiller ;
- la figure 2 représente un schéma d'un dispositif de surveillance selon un mode de réalisation de l'invention ;
- la figure 3 représente un schéma de moyens de détection de tension pour un dispositif de surveillance selon un premier mode de réalisation de l'invention ;
- la figure 4 représente un schéma de moyens de détection de tension pour un dispositif de surveillance selon un second mode de réalisation de l'invention ;
- la figure 5 représente un schéma d'un circuit de traitement pour un dispositif de surveillance selon un mode de réalisation de l'invention ; et
- la figure 6 représente le schéma d'un appareil électrique comportant un dispositif de surveillance selon un mode de réalisation.

### DESCRIPTION DETAILLEE DE MODES DE REALISATION PREFERES

La figure 2 représente un schéma bloc d'un dispositif de surveillance 1 selon un mode de réalisation de l'invention. Ce dispositif comporte une entrée 10 de connexion à un conducteur de terre PE, une entrée 11 de connexion à un conducteur de neutre N, et une entrée 12 de connexion à un conducteur de phase Ph. Un premier circuit 13 de détection de tension est connecté entre l'entrée 10 et l'entrée 11 pour fournir un signal V1 représentatif d'une tension entre le conducteur de neutre et le conducteur de terre. Un second circuit 14 de détection de tension est connecté entre l'entrée 10 et l'entrée 12 pour fournir un signal V2 représentatif d'une tension entre un conducteur de phase et le conducteur de terre. Un troisième circuit 15 de détection de tension est connecté entre l'entrée 11 et l'entrée 12 pour fournir un signal V3 représentatif d'une tension entre un conducteur de phase et le conducteur de neutre.

Un circuit de traitement 16 reçoit les signaux V1, V2 et V3 fournis par les circuits de détection et fournit des signaux de sortie, en fonction des valeurs desdits signaux V1, V2 et V3. Les signaux de sortie sont notamment des signaux représentatifs de perte de neutre et/ou de perte de terre et/ou de d'erreur de connexion. Ainsi, le circuit de traitement fournit des signaux 90 de signalisation à un dispositif de signalisation 17 et/ou un signal 91 de commande à un relais 18 et/ou un signal 19 de détection sur une sortie 20.

Une impédance 21 connectée entre les entrées de phase et de neutre permet d'améliorer la détection lorsqu'une charge 7 n'est pas connectée sur le réseau.

Un circuit d'alimentation 22 connectée entre l'entrée de phase et de neutre, respectivement 12 et 11, fournit une alimentation électrique au circuit de traitement et au dispositif de signalisation. Une alimentation autonome de secours 23 permet de fournir une alimentation électrique même lorsqu'une tension entre phase et neutre n'est plus présente, notamment en cas de défaut suite à une perte de neutre ou de phase.

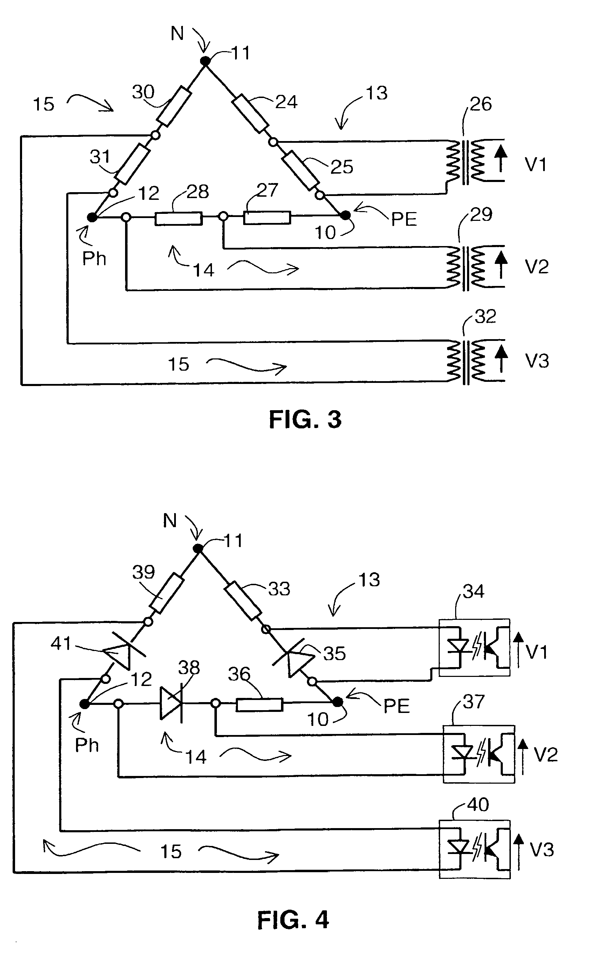

La figure 3 représente un schéma de circuits de détection de tension pour un dispositif de surveillance selon un premier mode de réalisation de l'invention. Les circuits de détection comportent un pont diviseur résistif associé à un transformateur pour assurer l'isolement électrique entre le réseau et le circuit de traitement.

Le circuit de détection 13 comporte des résistances 24 et 25 en série connectées entre les entrées 11 et 10, et un transformateur 26 ayant un enroulement primaire connecté sur la résistance 25 et un enroulement secondaire fournissant le signal V1 au circuit de traitement 16. Le circuit de détection 14 comporte des résistances 27 et 28 en série connectées entre les entrées 10 et 12, et un transformateur 29 ayant un enroulement primaire connecté sur la résistance 28 et un enroulement secondaire fournissant le signal V2 au circuit de traitement 16. Le circuit de détection 15 comporte des résistances 30 et 31 en série connectées entre les entrées 11 et 12, et un transformateur 32 ayant un enroulement primaire connecté sur la résistance 31 et un enroulement secondaire fournissant le signal V3 au circuit de traitement 16.

La figure 4 représente un schéma de circuits de détection de tension pour un dispositif de surveillance selon un second mode de réalisation de l'invention. Les circuits de détection comportent une résistance de limitation de courant connectée en série avec un coupleur optique et une diode de protection connectée en tête-bêche. Le coupleur optique assure l'isolement électrique entre le réseau et le circuit de traitement.

Le circuit de détection 13 comporte une résistance 33 en série avec une entrée d'un coupleur optique 34 et une diode 35 de protection inverse connectés entre les entrées 11 et 10, le coupleur optique ayant une sortie pour fournir le signal V1 au circuit de traitement 16. Le circuit de détection 14 comporte une résistance 36 en série avec une entrée d'un coupleur optique 37 et une diode 38 de protection inverse connectés entre les entrées 10 et 12, le coupleur optique ayant une sortie pour fournir le signal V2 au circuit de traitement 16. Le circuit de détection 15 comporte une résistance 39 en série avec une entrée d'un coupleur optique 40 et une diode 41 de protection inverse connectés entre les entrées 11 et 12, le coupleur optique ayant une sortie pour fournir le signal V3 au circuit de traitement 16. Les sorties des coupleurs optiques peuvent être phototransistors polarisés par des composants du circuit de traitement 16.

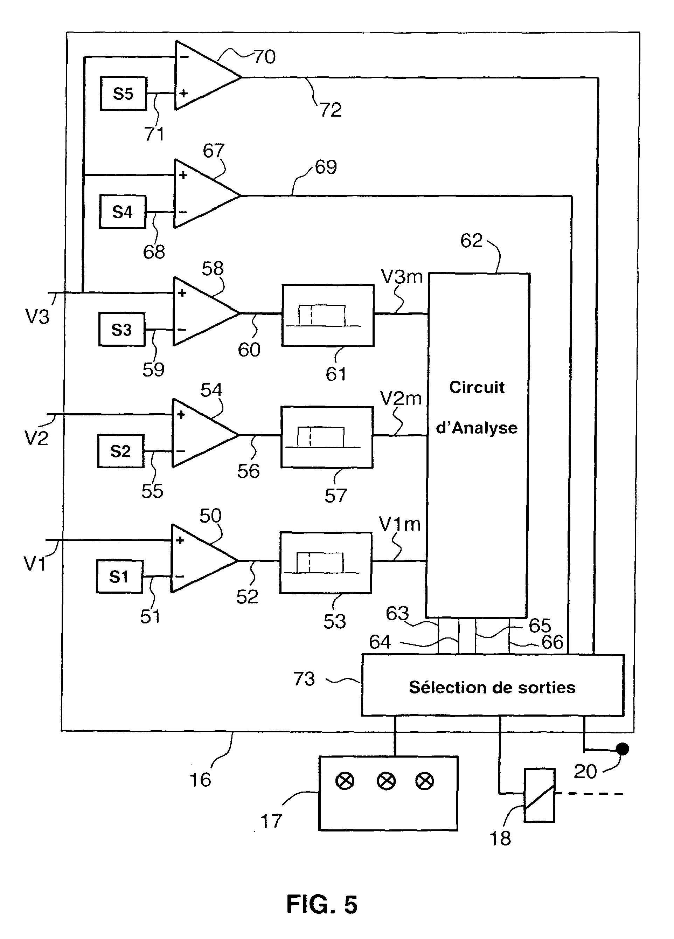

La figure 5 représente un schéma d'un circuit de traitement 16 pour un dispositif de surveillance selon un mode de réalisation de l'invention. Un premier comparateur 50 reçoit le signal V1 et le compare à un premier seuil 51 pour fournir un signal de sortie 52 à un circuit 53 de mémorisation temporaire. Un second comparateur 54 reçoit le signal V2 et le compare à un second seuil 55 pour fournir un signal de sortie 56 à un circuit 57 de mémorisation temporaire. Un troisième comparateur 58 reçoit le signal V3 et le compare à un troisième seuil 59 pour fournir un signal de sortie 60 à un circuit 61 de mémorisation temporaire. Les circuits 53, 57 et 61 fournissent des signaux V1m, V2m et V3m à un circuit d'analyse 62 qui permet de détecter le type de défaut, en fournissant notamment un signal 63 de perte de neutre, un signal 64 de perte de terre, un signal 65 d'erreur de connexion, ou un signal 66 de fonctionnement normal.

De préférence, le circuit d'analyse fournit un signal de connexions normales lorsque le signal V1 est inférieur au seuil 51, le signal V2 est supérieur au seuil 55, et le signal V3 est supérieur au seuil 59.

De préférence, le circuit d'analyse fournit un signal 63 de perte de conducteur neutre lorsque le signal V2 est supérieur au seuil 55, et le signal V3 est inférieur au seuil.

De préférence, le circuit d'analyse fournit un signal de perte de conducteur de terre lorsque le signal V2 est inférieur au seuil 55, et le signal V3 est supérieur au seuil 59.

De préférence, le circuit d'analyse fournit un signal d'erreur de connexion lorsque le signal V1 est supérieur au seuil 51, le signal V2 est inférieur au seuil 55, et le signal V3 est supérieur au seuil 59.

Par exemple, les seuils 51, 55, 59 peuvent correspondre à des tensions ayant des effets entre 20% et 80% d'une tension nominale 3 de réseau. De préférence, les effets de ces seuils sont compris entre 40% et 60% de la tension nominale 3 du réseau 2.

Dans l'exemple de la figure 5, le circuit de traitement 16 comporte un quatrième comparateur 67 recevant le signal V3 représentatif d'une tension entre une phase et neutre pour le comparer à un quatrième seuil 68 et fournir un signal 69 de détection de surtension, et un cinquième comparateur 70 recevant le signal V3 pour le comparer à un seuil bas 71 et fournir un signal 72 de détection de sous tension ou de baise de tension.

Les signaux 63, 64, 65, 66 69 et/ou 70 peuvent être appliqués à un circuit 73 de sélection de sorties pour paramétrer les signaux qui commanderont le dispositifs de signalisation 17, les signaux qui déclencheront le relais 18, et/ou les signaux qui seront envoyés sur la sortie 20 de communication. Par exemple, tous les signaux peuvent être envoyés sur la sortie 20, les signaux de perte de neutre, de perte de terre et de surtension peuvent commander le relais 18, et les signaux de perte de neutre, de perte de terre, et d'erreur de connexion, et de fonctionnement normal peuvent être fournis au dispositif de signalisation 17.

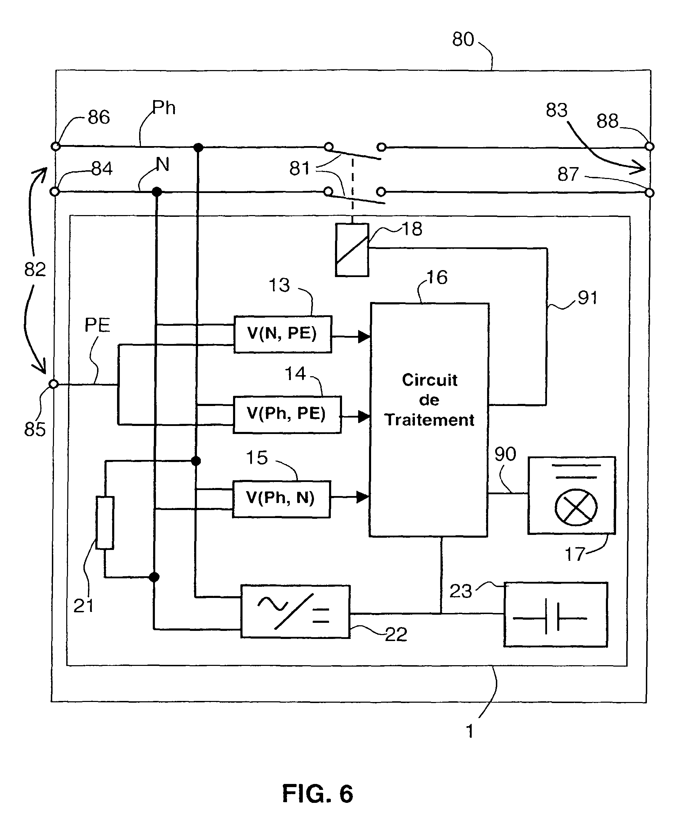

La figure 6 représente le schéma d'un appareil électrique 80 comportant un dispositif de surveillance selon un mode de réalisation de l'invention. L'appareil 80 est un appareil de coupure électrique comportant des contacts électriques principaux 81 reliés entre une entrée 82 et une sortie 83, et un relais 18 de déclenchement de l'ouverture desdits contacts principaux. L'entrée 82 comporte une borne 84 de conducteur de neutre, une borne 85 de conducteur de terre et au moins une borne 86 de conducteur de phase. La sortie comporte une borne 87 de sortie de neutre et au moins une borne 88 de sortie de phase pour alimenter une charge ou une partie aval d'une installation électrique.

L'appareil 80 comporte un dispositif de surveillance 1, par exemple tel que décrit dans les modes de réalisation ci-dessus, pour fournir un signal 90 d'ouverture au relais de déclenchement 18.

Le premier circuit 13 de détection de tension est connecté entre la borne 84 de conducteur de neutre et la borne 85 de conducteur de terre. Le second circuit 14 de détection de tension est connecté entre la borne 86 de conducteur de phase et la borne 85 de conducteur de terre. Le troisième circuit 15 de détection de tension est connecté entre la borne 86 de conducteur de phase et la borne 84 de conducteur de neutre.

Dans les modes de réalisation décrits ci-dessus les différents circuits ont été représentés de manière séparée. Par exemple, les circuits 53, 57 et 61 peuvent être réalisés avec des circuits monostables temporisés, et le circuit 62 peut être un circuit de décodage trois vers huit. Cependant, dans d'autres modes de réalisation de l'invention des fonctions des circuits peuvent être réalisées par des composants analogiques, numériques et/ou regroupées et intégrées dans un même composant. Il est aussi possible de réalisée certaines fonctions avec un composant programmable tel qu'un microprocesseur ou un microcontrôleur.

Le dispositif de signalisation 17 peut comporter des diodes électroluminescentes, des afficheurs à cristaux liquides ou d'autres types de voyants.

Les modes de réalisation ci-dessus montrent des schémas monophasés mais l'invention concerne aussi des dispositifs fonctionnant sur un réseau triphasé. Dans ce cas, les conducteurs de phase peuvent comporter des circuits de redressement pour fonctionner avec des circuits de détection tels que représentés sur la figure 4.

L'appareil électrique 80 peut être notamment un disjoncteur ou un interrupteur, il peut aussi comporter d'autres fonctions de protections électriques par exemple des protections différentielle, de surcharge ou de court circuit.

## Revendications

1. Dispositif de surveillance de conducteurs de neutre (N) et de terre (PE) comportant :
- des moyens de traitement (16) pour fournir un signal de détection de perte de neutre, et
- des premiers moyens (13) de détection de tension destinés à être connectés entre un conducteur de neutre (N) et un conducteur de terre (PE) pour fournir audits moyens de traitement (16) un premier signal (V1) représentatif d'une tension entre neutre et terre,
dispositif **caractérisé en ce qu'**il comporte :
- des seconds moyens de détection (14) de tension destinés à être connectés entre un conducteur de phase (Ph) et le conducteur de terre (PE) pour fournir audits moyens de traitement un second signal (V2) représentatif d'une tension entre phase et terre, et
- des troisièmes moyens de détection (15) de tension destinés à être connectés entre le conducteur de phase (Ph) et le conducteur de neutre (N) pour fournir audits moyens de traitement un troisième signal (V3) représentatif d'une tension entre phase et neutre,
les moyens de traitement fournissant un signal (19, 63, 64, 90, 91) de perte neutre et/ou un signal de perte de terre en fonction des valeurs dudit premier signal (V1) fourni par lesdits premiers moyens de détection, dudit second signal (V2) fourni par lesdits seconds moyens de détection, et dudit troisième signal (V3) fourni par lesdits troisièmes moyens de détection.

2. Dispositif de surveillance selon la revendication 1 **caractérisé en ce que** les moyens de traitement (16) fournissent un signal (19, 65, 90, 91) d'erreur de connexion de conducteurs de neutre, de phase, et/ou de terre en fonction des valeurs dudit premier signal (V1) fourni par lesdits premiers moyens de détection, dudit second signal (V2) fourni par lesdits seconds moyens de détection, et dudit troisième signal (V3) fourni par lesdits troisièmes moyens de détection.

3. Dispositif de surveillance selon l'une des revendications 1 ou 2 **caractérisé en ce qu'**il comporte des moyens de signalisation (17) de défaut de perte de neutre et/ou de perte de terre connectés aux moyens de traitement.

4. Dispositif de surveillance selon l'une quelconque des revendications 1 à 3 **caractérisé en ce que** les moyens de traitement fournissent un signal de connexions normales lorsque :
- le premier signal (V1) représentatif d'une tension entre neutre et terre est inférieur à un premier seuil prédéterminé (51),
- le second signal (V2) représentatif d'une tension entre phase et terre est supérieur à un second seuil prédéterminé (55), et
- le troisième signal (V3) représentatif d'une tension entre phase et neutre est supérieur à un troisième seuil prédéterminé (59).

5. Dispositif de surveillance selon l'une quelconque des revendications 1 à 4 **caractérisé en ce que** les moyens de traitement (16) fournissent un signal de perte de conducteur neutre lorsque :
- le second signal (V2) représentatif d'une tension entre phase et terre est supérieur à un second seuil prédéterminé (55), et
- le troisième signal (V3) représentatif d'une tension entre phase et neutre est inférieur à un troisième seuil prédéterminé (59).

6. Dispositif de surveillance selon l'une quelconque des revendications 1 à 5 **caractérisé en ce que** les moyens de traitement fournissent un signal de perte de conducteur de terre lorsque:
- le second signal (V2) représentatif d'une tension entre phase et terre est inférieur à un second seuil prédéterminé (55), et
- le troisième signal (V3) représentatif d'une tension entre phase et neutre est supérieur à un troisième seuil prédéterminé (59).

7. Dispositif de surveillance selon l'une quelconque des revendications 1 à 6 **caractérisé en ce que** les moyens de traitement fournissent un signal d'erreur de connexion lorsque :
- le premier signal (V1) représentatif d'une tension entre neutre et terre est supérieur à un premier seuil prédéterminé (V51),
- le second signal (V2) représentatif d'une tension entre phase et terre est inférieur à un second seuil prédéterminé (55), et
- le troisième signal (V3) représentatif d'une tension entre phase et neutre est supérieur à un troisième seuil prédéterminé (59).

8. Dispositif de surveillance selon l'une quelconque des revendications 1 à 7 **caractérisé en ce que** les premiers, les seconds et les troisièmes moyens de détection (13, 14, 15) comportent des moyens d'isolement électrique (26, 29, 32, 34, 37, 40) entre des signaux d'entrée et des signaux de sortie.

9. Dispositif de surveillance selon l'une quelconque des revendications 1 à 8 **caractérisé en ce** qui les moyens de traitement comportent une alimentation électrique autonome (23) fournissant de l'énergie électrique aux circuits desdits moyens de traitement en cas de défaut d'alimentation normale.

10. Appareil de coupure électrique comportant des contacts électriques principaux (81) reliés entre une entrée (82) et une sortie (83), un relais (18) de déclenchement de l'ouverture desdits contacts principaux, l'entrée (82) comportant une borne (84) de conducteur de neutre, une borne (85) de conducteur de terre et au moins une borne (86) de conducteur de phase,
appareil **caractérisé en ce qu'**il comporte au moins un dispositif de surveillance (1) selon l'une quelconque des revendications 1 à 9 fournissant un signal (91) d'ouverture au relais (17) de déclenchement, les premiers moyens (13) de détection de tension étant connectés entre la borne (84) de conducteur de neutre et la borne (85) de conducteur de terre, les seconds moyens (14) de détection de tension étant connectés entre la borne (86) de conducteur de phase et la borne (85) de conducteur de terre, et les troisièmes moyens (15) de détection de tension étant connectés entre la borne (86) de conducteur de phase et la borne (84) de conducteur de neutre.

## Claims

1. A monitoring device for monitoring a neutral conductor (N) and an earth conductor (PE) comprising:
- processing means (16) to supply a loss of neutral detection signal, and
- first voltage detection means (13) designed to be connected between a neutral conductor (N) and an earth conductor (PE) to supply a first signal (V1) representative of a voltage between neutral and earth to said processing means (16),
a device **characterized in that** it comprises:
- second voltage detection means (14) designed to be connected between a phase conductor (Ph) and the earth conductor (PE) to supply a second signal (V2) representative of a voltage between phase and earth to said processing means, and
- third voltage detection means (15) designed to be connected between the phase conductor (Ph) and neutral conductor (N) to supply a third signal (V3) representative of a voltage between phase and neutral to said processing means,
the processing means supplying a loss of neutral and/or loss of earth signal (19, 63, 64, 90, 91) according to the values of said first signal (V1) supplied by said first detection means, of said second signal (V2) supplied by said second detection means, and of said third signal (V3) supplied by said third detection means.

2. The monitoring device according to claim 1 **characterized in that** the processing means (16) supply a neutral, phase, and/or earth conductor connection error signal (19, 65, 90, 91) according to the values of said first signal (V1) supplied by said first detection means, of said second signal (V2) supplied by said second detection means, and of said third signal (V3) supplied by said third detection means.

3. The monitoring device according to either one of the claims 1 or 2 **characterized in that** it comprises loss of neutral and/or loss of earth fault annunciation means (17) connected to the processing means.

4. The monitoring device according to any one of the claims 1 to 3 **characterized in that** the processing means supply a normal connections signal when:
- the first signal (V1) representative of a voltage between neutral and earth is lower than a preset first threshold (51),
- the second signal (V2) representative of a voltage between phase and earth is higher than a preset second threshold (55), and
- the third signal (V3) representative of a voltage between phase and neutral is higher than a preset third threshold (59).

5. The monitoring device according to any one of the claims 1 to 4 **characterized in that** the processing means (16) supply a loss of neutral conductor signal when:
- the second signal (V2) representative of a voltage between phase and earth is higher than a preset second threshold (55), and
- the third signal (V3) representative of a voltage between phase and neutral is lower than a preset third threshold (59).

6. The monitoring device according to any one of the claims 1 to 5 **characterized in that** the processing means supply a loss of earth conductor signal when:
- the second signal (V2) representative of a voltage between phase and earth is lower than a preset second threshold (55), and
- the third signal (V3) representative of a voltage between phase and neutral is higher than a preset third threshold (59).

7. The monitoring device according to any one of the claims 1 to 6 **characterized in that** the processing means supply a connection error signal when:
- the first signal (V1) representative of a voltage between neutral and earth is higher than a preset first threshold (51),
- the second signal (V2) representative of a voltage between phase and earth is lower than a preset second threshold (55), and
- the third signal (V3) representative of a voltage between phase and neutral is higher than a preset third threshold (59).

8. The monitoring device according to any one of the claims 1 to 7 **characterized in that** the first, second and third detection means (13, 14, 15) comprise means for electric isolation (26, 29, 32, 34, 37, 40) between the input signals and output signals.

9. The monitoring device according to any one of the claims 1 to 8 **characterized in that** the processing means comprise an autonomous electric power supply (23) supplying electric power to the circuitry of said processing means in case of failure of the normal power supply.

10. An electric switchgear apparatus comprising main electric contacts (81) connected between an input (82) and an output (83), a trip relay (18) triggering opening of said main contacts, the input (82) comprising a neutral conductor terminal (84), an earth conductor terminal (85) and at least one phase conductor terminal (86),
an apparatus **characterized in that** it comprises at least one monitoring device (1) according to any one of claims 1 to 9 supplying an opening signal (91) to the trip relay (17), the first voltage detection means (13) being connected between the neutral conductor terminal (84) and the earth conductor terminal (85), the second voltage detection means (14) being connected between the phase conductor terminal (86) and the earth conductor terminal (85), and the third voltage detection means (15) being connected between the phase conductor terminal (86) and the neutral conductor terminal (84).

## Patentansprüche

1. Einrichtung zur Überwachung von Neutralleitern (N) und Schutzleitern (PE) mit
- Verarbeitungsmitteln (16) zur Lieferung eines Neutralleiter-Verlustsignals und
- ersten Spannungsdetektionsmitteln (13), die dazu dienen, zwischen einen Neutralleiter (N) und einen Schutzleiter (PE) geschaltet zu werden, um an die genannten Verarbeitungsmittel (16) ein erstes Signal (V1) zu liefern, das eine Spannung zwischen dem Neutralleiter und dem Schutzleiter abbildet, welche Einrichtung **dadurch gekennzeichnet ist, dass** sie:
- zweite Spannungsdetektionsmittel (14), die dazu dienen, zwischen einen Phasenleiter (Ph) und den Schutzleiter (PE) geschaltet zu werden, um an die genannten Verarbeitungsmittel einen zweites Signal (V2) zu liefern, das eine Spannung zwischen einer Phase und Erde abbildet, sowie
- dritte Spannungsdetektionsmittel (15) umfasst, die dazu dienen, zwischen den Phasenleiter (Ph) und den Neutralleiter (PE) geschaltet zu werden, um an die genannten Verarbeitungsmittel einen drittes Signal (V3) zu liefern, das eine Spannung zwischen Phase und Neutralleiter abbildet, wobei die Verarbeitungsmittel ein Neutralleiter- und/oder Schutzleiter-Verlustsignal (19, 63, 64, 90, 91) in Abhängigkeit von den Werten des durch die genannten ersten Detektionsmittel gelieferten ersten Signals (V1), des durch die genannten zweiten Detektionsmittel gelieferten zweiten Signals (V2) sowie des durch die genannten dritten Detektionsmittel gelieferten dritten Signals (V1) liefern.

2. Überwachungseinrichtung nach Anspruch 1, **dadurch gekennzeichnet, dass** die Verarbeitungsmittel (16) ein Neutralleiter-, Phasenleiter- und/oder Schutzleiter-Anschlussfehlersignal (19, 65, 90, 91) in Abhängigkeit von den Werten des durch die genannten ersten Detektionsmittel gelieferten ersten Signals (V1), des durch die genannten zweiten Detektionsmittel gelieferten zweiten Signals (V2) sowie des durch die genannten dritten Detektionsmittel gelieferten dritten Signals (V1) liefern.

3. Überwachungseinrichtung nach einem der Ansprüche 1 oder 2, **dadurch gekennzeichnet, dass** sie an die Verarbeitungsmittel angeschlossene Fehlermeldemittel (17) zur Anzeige eines Neutralleiterverlusts und/oder Schutzleiterverlusts umfassen.

4. Überwachungseinrichtung nach irgendeinem der Ansprüche 1 bis 3, **dadurch gekennzeichnet, dass** die Verarbeitungsmittel ein Normalverbindungssignal liefern, wenn
- das eine Spannung zwischen Neutralleiter und Schutzleiter abbildende erste Signal (V1) unter einem bestimmten ersten Schwellwert (51) liegt,
- das eine Spannung zwischen Phasenleiter und Schutzleiter abbildende zweite Signal (V2) über einem bestimmten zweiten Schwellwert (55) liegt und
- das eine Spannung zwischen Phasenleiter und Neutralleiter abbildende dritte Signal (V3) über einem bestimmten dritten Schwellwert (59) liegt.

5. Überwachungseinrichtung nach irgendeinem der Ansprüche 1 bis 4, **dadurch gekennzeichnet, dass** die Verarbeitungsmittel (16) ein Neutralleiter-Verlustsignal liefern, wenn
- das eine Spannung zwischen Phasenleiter und Schutzleiter abbildende zweite Signal (V2) über einem bestimmten zweiten Schwellwert (55) liegt und
- das eine Spannung zwischen Phasenleiter und Neutralleiter abbildende dritte Signal (V3) unter einem bestimmten dritten Schwellwert (59) liegt.

6. Überwachungseinrichtung nach irgendeinem der Ansprüche 1 bis 5, **dadurch gekennzeichnet, dass** die Verarbeitungsmittel (16) ein Schutzleiter-Verlustsignal liefern, wenn
- das eine Spannung zwischen Phasenleiter und Schutzleiter abbildende zweite Signal (V2) unter einem bestimmten zweiten Schwellwert (55) liegt und
- das eine Spannung zwischen Phasenleiter und Neutralleiter abbildende dritte Signal (V3) über einem bestimmten dritten Schwellwert (59) liegt.

7. Überwachungseinrichtung nach irgendeinem der Ansprüche 1 bis 6, **dadurch gekennzeichnet, dass** die Verarbeitungsmittel ein Anschlussfehlersignal liefern, wenn
- das eine Spannung zwischen Neutralleiter und Schutzleiter abbildende erste Signal (V1) über einem bestimmten ersten Schwellwert (51) liegt,
- das eine Spannung zwischen Phasenleiter und Schutzleiter abbildende zweite Signal (V2) unter einem bestimmten zweiten Schwellwert (55) liegt und
- das eine Spannung zwischen Phasenleiter und Neutralleiter abbildende dritte Signal (V3) über einem bestimmten dritten Schwellwert (59) liegt.

8. Überwachungseinrichtung nach irgendeinem der Ansprüche 1 bis 7, **dadurch gekennzeichnet, dass** die ersten, zweiten und dritten Detektionsmittel (13, 14, 15) Mittel (26, 29, 32, 34, 37, 40) zur galvanischen Trennung der Eingangssignale von den Ausgangssignalen umfassen.

9. Überwachungseinrichtung nach irgendeinem der Ansprüche 1 bis 8, **dadurch gekennzeichnet, dass** die Verarbeitungsmittel eine unabhängige Stromversorgung (23) umfassen, die bei Ausfall der normalen Stromversorgung die Stromkreise der genannten Verarbeitungsmittel mit Spannung versorgt.

10. Elektrisches Schaltgerät mit zwischen einen Eingang (82) und einen Ausgang (83) geschalteten elektrischen Hauptkontakten (81) sowie einem Auslöserelais (18) zur Abschaltung der genannten Hauptkontakte, wobei der Eingang (82) eine Neutralleiterklemme (84), eine Schutzleiterklemme (85) und mindestens eine Phasenleiterklemme (86) umfasst, welches
Schaltgerät **dadurch gekennzeichnet ist, dass** es mindestens eine Überwachungseinrichtung (1) nach irgendeinem der Ansprüche 1 bis 9 umfasst, die ein Auslösesignal (91) an das Auslöserelais (17) liefert, wobei die ersten Spannungsdetektionsmittel (13) zwischen die Neutralleiterklemme (84) und die Schutzleiterklemme (85), die zweiten Spannungsdetektionsmittel (14) zwischen die Phasenleiterklemme (86) und die Schutzleiterklemme (85) und die dritten Spannungsdetektionsmittel (15) zwischen die Phasenleiterklemme (86) und die Neutralleiterklemme (84) geschaltet sind.
